(19) Europäisches Patentamt / European Patent Office / Office européen des brevets

(11) **EP 2 797 257 A1**

(12) **EUROPEAN PATENT APPLICATION**

(43) Date of publication:
**29.10.2014 Bulletin 2014/44**

(51) Int Cl.:
***H04L 12/24*** *(2006.01)*

(21) Application number: **13290089.5**

(22) Date of filing: **22.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Hilt, Volker**
**71334 Waiblingen (DE)**
• **Scharf, Michael**
**70435 Stuttgart (DE)**
• **Voith, Thomas**
**70806 Komwestheim (DE)**
• **Stein, Manuel**
**70197 Stuttgart (DE)**

(74) Representative: **Zinsinger, Norbert et al**
**Louis, Pöhlau, Lohrentz**
**Patentanwälte**
**Postfach 30 55**
**90014 Nürnberg (DE)**

(54) **Method for providing network topology information in a communication network**

(57) The present invention concerns a method for providing network topology information in a communication network, the method comprising gathering (110) detailed information of a network topology of the communication network, the detailed information comprising vertex metadata and edge metadata of the network topology, embedding (120) the network topology in a n-dimensional coordinate system in particular dependent on the vertex metadata and/or the edge metadata, wherein the embedded network topology is represented by a set of points in the n-dimensional coordinate system, processing (130) network topology information of the embedded network topology and exporting (150) the processed network topology information. The present inventions concerns further a data processing component and a software product adapted to implement the steps of the method of the present invention.

*Fig. 1*

## Description

Background

The present invention is situated in the field of communication network and more particularly the provision of information of the network topology to users of the communication network.

In a communication network, there is a requirement to provide information of the network topology of the communication network for example from a provider of the communication network to clients of the communication network. However, the provider might not want to provide information of the communication network in detail because he might not want that the clients know how exactly the communication network is implemented. In addition, the provision of information of the communication network in detail would lead to an immense effort in regard of processing and storing of information. Therefore, there is a need to provide information of a communication network in an improved way, in particular according to the communication needs of a client and/or according to the granularity or level of detail of the information of the communication network that the provider of the communication network is ready to expose to the clients.

Summary

The present invention aims to improve the provision of network topology information in a communication network.

The objective of the present invention is achieved by a method for providing network topology information in a communication network, the method comprising gathering detailed information of a network topology of the communication network, the detailed information comprising vertex metadata and edge metadata of the network topology, embedding the network topology in a n-dimensional coordinate system, in particular dependent on the vertex metadata and/or the edge metadata, wherein the embedded network topology is represented by a set of points in the n-dimensional coordinate system, processing network topology information of the embedded network topology and exporting the processed network topology information. The metadata are to be understood as one or more generic terms by which the vertices and edges are characterized in the context of communication, such as bandwidth, geographical position, delay, cost values etc., the latter refers e.g. to the financial effort of communication between two vertices and/or via an edge which links to vertices of a communication path.

The objective of the present invention is further achieved by a data processing component and by a software product. The data processing component is adapted to gather detailed information of a network topology of the communication network, the detailed information comprising vertex metadata and edge metadata of the network topology, to embed the network topology in a n-dimensional coordinate system, in particular dependent on the vertex metadata and/or the edge metadata, wherein the embedded network topology is represented by a set of points in the n-dimensional coordinate system, to process network topology information of the embedded network topology and to export the processed network topology information. The software product, when executed by a data processing component, is adapted to embed a network topology of a communication network in a n-dimensional coordinate system based on detailed information of the network topology, the detailed information comprising vertex metadata and edge metadata of the network topology, wherein the embedded network topology is represented by a set of points in the n-dimensional coordinate system, to process network topology information of the embedded network topology and to export the processed network topology information.

Further advantages of the present invention are achieved by embodiments of the dependent claims. The preferred embodiments are not to be understood as being exclusive, but as being combinable forming further preferred embodiments.

In a preferred embodiment, the step of gathering detailed information of a network topology of the communication network comprises obtaining network topology information from network equipment, in particular routers, monitoring devices, in particular via Border Gateway Protocol, "BGP", a routing analysis solution or a Network Management System, "NMS".

In a preferred embodiment, the step of gathering detailed information of a network topology of the communication network comprises calculating network topology metadata describing the network topology, the network topology metadata comprising vertex metadata derived from metrics of nodes of the communication network represented by respective vertices, and edge metadata derived from metrics of links of the communication network represented by respective edges. From a geographical network topology which comprises nodes and links a virtualized network topology is calculated in which the vertices which correspond to nodes are described by vertex metadata and the edges which correspond to links are described by vertex metadata. The virtualized network topology contains all information of the geographical network topology and the information is provided in a manner suitable for describing the network from the communication point of view. Both the geographical and the virtualized network topology might be termed as the original network topology because the two representations are exchangeable, because the information provided in them is same, only the way of presentation is different. While the original geographical representation corresponds to the network topology in reality comprising nodes (such as sender, transmitter station etc.) and links (communication paths provided by wired or wireless communication), the original virtualized geographical representation is a representation in which the network metrics are presented in a manner suitable for evaluating the communication capacity of the communication network (such as bandwidth, datarate etc.) but still the information about the geographical distance is provided as one data value in the metadata of the vertices and/or edges. For example an edge is rather described as the bandwidth which is provided between one vertex and another vertex, but the geographical distance between the two vertices is still present amongst the metadata of the edge between the two vertices.

In a preferred embodiment, the step of embedding the network topology into a n-dimensional coordinate system comprises applying an embedding function on one or more of the vertex metadata and/or on one or more of the edge metadata, wherein the embedding function translates values of the one or more vertex metadata and/or edge metadata into vector coordinates of the points in the n-dimensional coordinate system, wherein each of the points corresponds to a vertex in the network topology before embedding, wherein each of the vector coordinates is calculated out one or more of the vertex metadata and/or one or more of edge metadata of the network topology.

By embedding the original virtualized network topology into an embedded network topology, the network is presented as a set of vectors with corresponding points. The points might be regarded as the end points of the vectors. In case, the vector coordinates are given in an orthogonal coordinates system (for example x-values and y-values; and not as length and degree) the coordinates of the vectors and the coordinates of the points are same. The reason for describing the points by corresponding and equivalent vectors might be seen in that in mathematical operations, the vectors in particular by their description in length and degree might be easier to process in computer processing, at least in some calculations. In general, the points in the embedded network topology and the corresponding vectors in the embedded network topology might be regarded as equivalent.

In general, the reason for embedding the original network topology into the embedded representation is that the processing in the embedded network topology is facilitated by calculating points and in particular vectors instead of processing vertices and edges or nodes and links.

In a preferred embodiment, the embedding is implemented by force-directed algorithms that optimize the position of points in the embedded topology, in particular by providing an equilibrium of competing graph edge lengths in the embedded network topology by determining the optimal relative position of vertices to one another with an overall minimal force energy. In particular, the embedding is implemented by means of force functions (based on Hooke's Law, Coulomb's Law, etc.) or varying algorithmic approaches, e.g. linear optimization, partial differentiation (Kamada Kawai), simulated annealing, higher-dimensional embedding, etc. Force-directed algorithms might be understood in short as algorithms derived from physical algorithms in which a force (spring force or electrical force) is taken as a measure if a representation is in equilibrium. For example, in a simulation, springs would be placed between all points and the force (e.g. pulling the points together by the spring energy) between the points would be measured, and it is tried to equalize the spring forces between all points so that the relative position of the points is in the best equilibrium. This is also meant by the description that the tensions between the points should be minimized. In the embedded representation of the network the tensions between the points might be caused by network constraints such as distance and bandwidth and it is tried to minimize the faults of the network presentation by calculating the minimal error.

In a preferred embodiment, the embedding enables not only visualization, but also using geometric relations (e.g. Euclidean norm, triangle inequality) in the embedded representation instead of original graph characteristics. For instance, the distance between two graph vertices in the original network topology could be measured as the Euclidean distance between the positions of two points in the embedded network topology representation.

In a preferred embodiment, embedding algorithms may take into account the relative position of vertices in the embedded representation, using expressions of the geometric relations (e.g. distances, areas, etc.) in order to formulate tensions (e.g. linear or quadratic error) against original graph metrics (e.g. delay, loss, bandwidth). Then, a graph embedding is algorithmically approximated or optimized to achieve a low overall sum of tensions. Thereby, it is aimed to achieve a good tradeoff between the original network topology representation and the embedded network topology representation such as the information of the original network topology is represented in the embedded network topology with a minimum of faults, for example the distance between two points in the embedded representation might not be identical to the costs between two vertices in the original graph. However, based on the approximation and optimization algorithms presented above, the fault is reduced to an acceptable minimum.

In a preferred embodiment, the embedding step may comprise graph completion, i.e. to derive a complete graph from the sparse network metrics in the gathered network topology information, weighted adjacency matrix in order to have force-directed embedding respecting inherent constraints (as in e.g. Kamada Kawai). An inherent constraint might be understood in general as a condition that a solution to an optimization problem is required by the problem itself to satisfy. In the context of graph embedding, the faults that occur in the embedded representation might be caused by the conditions under which the vertices in the original network topology are embedded in the embedded topology according to different algorithms which might first provide mistakes in the embedded network topology which are tried to minimize in the following. For example, the points in the embedded representation are chosen according to the bandwidth which is provided in the original topology, but according to the plurality of vertices in the original topology, the position of a first point to a second point might be determined such as the position of the first point to a third point does not correspond to bandwidth between the first and the third point exactly, because the position of the third point is determined according to the bandwidth between the third point and a forth point. Therefore, it has to be found an equilibrium between the fault of the representation of the distance between the first and the second, the first and the third and the third and the forth point etc. which corresponds at best to the bandwidth provided between the respective points in the original network topology. Furthermore, in a preferred embodiment, multiple metrics can be combined using different force-expressions.

In an embodiment of the invention, network graph data are obtained as a collection of network address vertices with vertex metadata and edges with edge metadata created from network metrics (e.g. routing topologies with comprised link cost; point-to-point measurements on links/paths). The data may be obtained through network equipment (e.g. routers, switches), infrastructure management entities (Network Management, Entity Management, Routing Analysis, etc.), monitoring databases or manual configuration. For the graph embedding, an embedding function is used on each network metric (cost, delay, geographic distances, etc.) that translates the metric values into geometric constraints (e.g. distances, angles, etc.) for the embedding. Further, network graph vertex properties are used to create geometric constraints (e.g. fixed positions, vertex distances, etc.) for the embedding. The collective geometric constraint expressions on edges and vertices are used in an embedding algorithm (e.g. force-directed placement) to determine vector coordinates for each vertex in an n-dimensional space with an ortho-normal basis of n independent vectors. The embedding may follow norms (e.g. Euclidean norm for vertex lengths and distances) and may respect inequalities (e.g. triangle inequality, Cauchy-Schwartz inequality) to compare embedded vectors against the geometric expressions derived from the network graph metadata. The embedding completes when a suitable vector space representation of the network graph has been found (e.g. minimal sum of least square errors between vector distances and edge distances).

In a preferred embodiment, the step of embedding the network topology further comprises choosing a user specific subset of the vertex metadata and/or of the edge metadata and applying the embedding function on the chosen subset of the vertex metadata and/or the edge metadata for calculating the vector coordinates.

In a preferred embodiment, the step of processing network topology information of the embedded network topology comprises selecting representatives of one or more of the points of the embedded network topology using properties of the points of the embedded topology, in particular position, relative position etc., and/or properties of one or more of the vertex metadata and/or of the edge metadata and/or policy information of the gathered network topology information. For example, points in the embedded network topology might be grouped together according to a function which groups points together between the bandwidth is above a certain level. This is because the communication between the respective points is relative good because of the high bandwidth. However, it might be determined by a policy of the original network topology that two particular nodes or vertices might not be aggregated into a group. In this case, the two points in the embedded network topology are not selected and aggregated into a group.

In a preferred embodiment, the step of selecting representatives of one or more of the points of the embedded network topology comprises aggregating one or more of the points of the embedded network topology into one or more clusters comprising one or more of the points of the embedded network topology. In a preferred embodiment, a Partition Identifier or Partition Identity (= PID) is given to each of the clusters, the Partition Identifier might be in particular an ALTO (= Application-Layer Traffic Optimization) PID.

In a preferred embodiment, the step of selecting network topology information uses one or more geometric (spatial) expressions to subsume points. This step can be used to group the previously placed points and is the geometric equivalent of finding vector sets in the embedded network topology or of vertex sets in the original network topology. In embedded graphs, the step is only of linear complexity to the number of points as each corresponding vector coordinates can be verified to lie within the spatial description, whereby graph traversal algorithms require path iterations in the original network topology. For example, in the original network topology, for determining the bandwidth between two vertices, the original graph might be traversed several times for finding the shortest way dependent on the vertices chosen between the start and the end vertex (or nodes in the geographical representation) as there are a plurality of different ways. However, as in the embedded network topology, the points might be positioned according to the bandwidth between the points, the points between which the bandwidth is provided to an optimum are placed closely together so that from the embedded network topology the selection of the particular points in regard of the provided bandwidth is much more easier, in particular might be derived directly from the distance between the two points in the embedded network topology representation.

In a preferred embodiment, the selecting is implemented by algorithms that identify clusters in the two- or three-dimensional coordinate space. A simple class of algorithms subdivides the coordinate space into a set of areas (e.g., a grid of rectangles) and aggregates all points inside that area into one new aggregate (cluster). More complex algorithms take into account the distances between the vertices (i.e., points in the coordinate space in the embedded network topology) in order to identify clusters. Consequently, the vertices are grouped together into aggregates that represent a set of vertices. Further processing may then use these aggregates instead of the original vertices. Specifically, ALTO PIDs may be assigned to each of the selected clusters.

In a preferred embodiment, the step of processing network topology information of the embedded network topology comprises abstracting the embedded network topology by merging points into a single point.

Abstraction, in the context of the present invention also termed as geometric abstraction, consists of merging or collapsing of points in the embedded representation of the network topology which corresponds to merging or collapsing of respective vertices in the original network topology which is the network topology before embedding. Geometric abstraction might be defined as an operation that replaces a set of points in the embedded network topology by a single point. This representative point is the geometric equivalent of a representative vertex after merging vertices in the original network topology, though the new vector coordinates of the point in the embedded network topology inherently describe a new relative position to all other points in the embedded network topology.

In a preferred embodiment, as the point which replaces the merged points as a representative of the points one of the existing points in the embedded network topology is selected. In another embodiment, a new representative point might be defined or determined, in the "middle" of all chosen points which are replaced by the new point. Preferably, by applying the abstracting step, the characteristics or properties of the merged points might be recalculated, e.g. the distance between the merged points and/or further points, bandwidth, datarate etc.

While after the selecting step described above the points, which are selected and in particular aggregated into a cluster and are represented by a representative point or vector of the cluster, still exist within the cluster, in contrast thereto after the abstracting step the points, which are merged into a single point, are replaced by this single point as the representative point or vector of the merged points and do not exist any more.

In a preferred embodiment, the step of processing network topology information of the embedded network topology comprises transforming vector coordinates of one or more points of the embedded network topology by geometrical operations, in particular by scaling, normalization, stretching, translating, shifting, reflection or rotation.

Transforming or in the context of the present invention geometric transformation might be generally defined as the modification of coordinates of vectors or points that produce similar pictures of the original point set by e.g. scaling (stretching), translation (shifting), reflection or rotation, etc.

In a preferred embodiment, by the step of (geometric) transformations one or more points which are for example the remainders in the embedded network topology as the representatives of a plurality of points which have been aggregated in a foregoing selecting step and/or replaced in a foregoing abstracting step by the new points which represent the selected and/or abstracted points are transformed by a transforming step, e.g. by pulling the remainder points towards the center of the collapsed space where the aggregated and/or replaced points have been position before the transforming and selecting and/or abstracting step. Dependent on the previously taken steps, also the relative position of the points might be and usually will be changed by the transforming step.

In a preferred embodiment, two points in the embedded network topology are merged together and replaced by a single point in case in the corresponding original network topology the links or edges between the corresponding nodes or vertices are redundant and are replaced by the link or edge with better cost values or further suitable property (higher bandwidth etc.). In the embedded network topology a corresponding merging step of two points might be processed based data in the embedded network topology, in the original network topology (e.g. vertex and/or edge metadata) or by back-transformation from the non-embedded network topology into the embedded network topology. Consequently, if, in particular because of a previous abstracting step, the points in the embedded network topology are re-positioned in the way that in the corresponding un-embedded network topology two parallel links or edges occur which combine two same two nodes or vertices, respectively, the parallel links or edges might be replaced by the better link or edge (with the better cost values etc.) and in the embedded network topology a corresponding processing might be provided. This processing might be implemented by intermediate back-transformation into the non-embedded network topology or based on the information stored as vector coordinates in the embedded network topology which enables this processing completely in the embedded representation.

In a preferred embodiment, the step of geometric selection and/or abstraction may also include processing of graph properties. Most notably, when several points in the embedded network topology which correspond to vertices in the original network topology before embedding representing IP address ranges are aggregated, the IP super-netting rules might be applied to the original and/or embedded network topology.

In this context, it has to be noted that after each step of processing in the embedded network topology, a back-transformation into a network representation of vertices and edges and/or nodes and links might be provided, this means into an virtualized network representation and/or geographical network topology which is described in the same terms (vertices/edges and nodes/links) as the very first original network topology. However, the back-transformed network topology results from the processed embedded network topology. On the back-transformed network topology further processing steps might be provided such as the IP super-netting rules.

In general, after each step of processing in the embedded network topology a back-transforming step into a non-embedded network topology described by vertices and edges and/or nodes and links might be provided, where further processing might be implemented. Afterwards, the further processed non-embedded network topology might be transformed into an embedded network topology and further steps of selecting, abstracting and/or transforming might be provided. Furthermore, after each processing in the embedded or non-embedded network topology a network map might be created to expose information on the (processed) network topology, including in particular a cost map which gives information on the costs (bandwidth, delay, financial effort etc.) of communication within the processed communication network, in particular of a particular link/edge or communication path.

In a preferred embodiment, one or more of the steps of selecting, abstracting and/or transforming embedded network topology information are executed repeatedly and/or in altered order. In particular, in more detail, the steps of selecting representatives of one or more of the points of the embedded network topology, abstracting the embedded network topology by merging points into a single point and/or transforming vector coordinates of one or more points of the embedded network topology are executed repeatedly and/or in altered order.

In general, the steps of embedding, geometric selection, transformation, abstraction and network map creation might be applied on the network topology more than once. In particular embodiments, the starting point for embedding may be multiple independent network topologies or metric graphs. Hence, original network topologies as well as embedded network topologies can coexist and may or may not undergo analogous modifications. E.g. if a geometric abstraction merges multiple points in an embedded network topology, the equivalent vertices would undergo merging in co-existing original network topology representations or non-embedded network topologies and therein, affected edges would be contracted. This could also mean vice versa that an embedding using force-directed placement may be recomputed according to the formulated tensions when an original or non-embedded network topology representation changes. This means in general, that in particular embodiments the results of a processing in one of an embedded network topology representation or non-embedded network topology representation might lead to further processing in the same or corresponding network topology representation (embedded/ non-embedded network topology representation). It has to be noted that corresponding embedded and non-embedded network topology representations after one or more steps of processing the network topology in the embedded or non-embedded representation might or might not be present.

In a preferred embodiment, the step of exporting the processed network topology information comprises creating a network map out of the processed network topology information. In particular, based on the data derived from the vector coordinates of the embedded topology representation, the values for the network map which would regularly be a non-embedded network topology representation, i.e. for the values of the network map topology's vertices/edges (usually described as metadata) and/or nodes/links (usually described as properties or cost values) are calculated, i.e. each of the vertices, edges and/or nodes, links is a function or result of mathematical calculation of one or more of the data derived from the processed embedded topology after the processing step based on which the respective network map is created, in particular based on the values of the vector coordinates of the embedded topology representation or embedded network topology, optionally in addition to further information derived from the embedded or non-embedded topology as described in more detail in the appropriate context.

In a preferred embodiment, topology exposure provides cost information between a set of network locations. For applications that select a location based on some cost optimum (minimum, maximum), or that use shortest-path like computation, the absolute value of the costs does not necessarily matter (exceptions exist, e. g., for delay constraints). In particular, by processing and exposing a cost map those costs are determined, e.g. by determining values from the embedded representation and/or by applying analogous modifications (selection/abstraction/transformation) on the non-embedded network topology. In particular, these costs can be determined by different functions using the available input information, e.g. by using the (geometric) distance in the embedded network topology, or a function thereof, as cost metric.

In a preferred embodiment, the step of creating a network map out of the processed network topology information further comprises using in addition to processed network topology information edge metadata, vertex metadata and/or properties derived from the embedded network topology and/or cost values, metrics and/or properties derived from the gathered network topology information.

In this context, it has to be noted that the terms metadata, properties, cost values or costs, metrics etc. are notions that describe the communication network and/or an element thereof by features such as bandwidth, delay, geographic distances, position etc. By this, the meaning and use of these terms might be overlapping and/or one of the features might comprise one or more of the other features as a kind of topic and sub-topic.

However, each of these feature or equivalent features in this technical field is used normally in the context of a particular element. For example, the term metric is rather used in the context of the original geographical network topology and the term metadata is rather used in the context of the virtualized original network topology. Therefore, the meaning of these features is not to be understood as an exclusive definition, but rather as a non-exhausting description and these and similar features even might be exchanged one by the other, the meaning thereof is derivable by the description in the respective context.

In a preferred embodiment, the embedded vector set is used to create a new network cost map by using vectors coordinate values for vertices and geometric relations for edge weights (e.g. vector distances, areas, volumes, angles, etc.) to create a full meshed network graph. The resulting network cost map is exposed to reply to network information requests through a network information interface (e.g. ALTO).

Preferably, the network map is created as a topology suitable for the user of the network map who wants to achieve information on a communication network, over which he transmits information, for example from his sender station to his receiver station. Hence, the topology of the network map might preferable provide a graph with reference to the original representation of the network topology, i.e. comprising nodes and links, in particular as a simplified, less detailed, representation of the original geographical representation and/or comprising vertices and edges, in a particular as a simplified, less detailed, representation of the original virtualized representation of the communication network. In further embodiments, the network map, in particular additionally and for further processing, might include information about points and vectors. In preferred embodiment, the network map might be re-processed by again implementing the steps of embedding, selecting, abstracting and/or transforming, and a further network map might be created.

In a preferred embodiment, the network map is created on query requests for particular information, such as determining the minimal path between two nodes/ vertices/ points of the network topology, wherein usually the query request relates to the original geographical representation of the communication network. In preferred embodiments, the query can be related to an intermediate result of the processing in the embedded network topology or corresponding virtualized network topology, e.g. related to the value of the area spanned between points embedded in a 2-dimensional embedded representation corresponding to the value of the area spanned between respective vertices in the virtualized representation.

In a preferred embodiment, the embedded vector set is used to create new network cost map by using vectors for vertices and geometric relations for edge weights (e.g. vector distances, areas, volumes, angles, etc.) to update edge weights of a partial network graph of known vertices.

In a preferred embodiment, the embedded vertex vector set is used to modify an existing network cost map by using vector geometric properties and relations for modification of existing vertex and edge properties.

In a preferred embodiment, a selection step is performed between graph embedding and network map creation that identifies groups/clusters of vectors. The network map creation then creates a network cost map (full or partial) by using vector clusters for vertices and geometric relations between vector groups for edge weights of the resulting network graph.

In a preferred embodiment, an abstraction step is applied between graph embedding and network map creation, that replaces a selected group of vectors by either a single, new vector or a different (typically smaller) set of new vectors.

In a preferred embodiment, the transformation step between graph embedding and network map creation applies a geometric transformation (e.g. scaling, translation, reflection, rotation, normalization) on either all vectors or a selected group of vectors.

In a preferred embodiment, the processing steps selection, abstraction and transformation can be applied repeatedly, in altered order and with different objectives on the embedded graph. Further, multiple, independent processing chains of graph processing steps can be applied resulting in multiple embedded graphs, each concluded with one or more network map creation steps.

In a preferred embodiment, an update of the obtained network metrics (changed/new/outdated values), can result in one or more transformation steps on the embedded graph.

In a preferred embodiment, an update of the obtained network metrics (changed/new/outdated values) can result in a re-evaluation of the graph embedding. An update to the set of network metrics causes an update (invalidation, extension) of geometric expressions used for the graph embedding. The re-evaluation starts with the embedded graph and alters vector coordinates of the network address vertices to respect the updated set of geometric expressions.

In a preferred embodiment, an update of the obtained network address vertices (addition/deletion) can trigger an abstraction, addition or deletion of vectors and/or vector groups and trigger re-evaluation of the graph embedding, new graph embedding and execution of the processing steps.

The processing of the embedded network topology, in particular due to an update of the original geographical network information, might be executed on the result or intermediate result of any of the processed network topology information, wherein in a corresponding virtualized network map, in particular provided by back-transformation of the processed embedded network topology into a virtualized network topology, geometric constraints might necessitate new positioning of vertices and edges.

In a preferred embodiment, updates of the obtained network information (network metrics, network address vertices), the result of the embedding and the result of each processing step (selection, abstraction, transformation) can be subject to an evaluation function that decides whether an execution of embedding and/or particular processing steps and/or processing chains and/or network map creation is required.

In a preferred embodiment, the properties (e.g. edge weights, vertices) of a graph resulting from a network map creation can be used for another graph embedding.

In a preferred embodiment, any intermediate result (network cost map graph or embedded vector set) can be exposed to reply to network information requests through a network information interface.

In a preferred embodiment, exposure of either a created network cost map graph or an embedded vector set can be achieved by storing or uploading the complete or partial representation to a storage or information server.

In a preferred embodiment, the result of geometric evaluation functions can be used to expose properties of intermediate embedded graph representations, e.g. diameter, expansion, vector density, mean/min/max distances, group sizes, etc.

In a preferred embodiment, graph embedding, processing (selection, abstraction, transformation), network map creation and evaluation functions can be parameterized, whereby parameter inputs can be obtained from parameter configuration and/or results of evaluation functions. By the step of parameterization, it could be determined the threshold that a metric graph values or network property must reach to result in an re-computerization or further processing of network topology information. With other words, by parameterization of a value, it is determined how much the value must be changed (higher or lower) to be taken into account for processing the network topology in particular by one or more of the steps of selecting, abstracting and transforming.

In a preferred embodiment, the composition of processing chains and parameterization can be changed at system runtime. Updates to the parameterization and processing chain composition can result in re-execution of the respective and subsequent processing steps and network map creations.

In a preferred embodiment, the step of exporting the processed network topology information further comprises exporting the processed network topology information by a corresponding interface, in particular ALTO.

## Brief description of the figures

Features and advantages of the present invention will be more completely understood by appreciating a detailed illustrative description of embodiments, where

Fig. 1     depicts a schematic view of steps of a method to provide network topology information

Fig. 2     depicts a schematic view of a communication network symbolizing the original network topology

Fig. 3     depicts a schematic view of a communication network symbolizing the embedded network topology

Fig. 4     depicts a schematic view of the step of selecting network topology information

Fig. 5     depicts a schematic view of the step of abstracting network topology information

Fig. 6     depicts a schematic view of the step of transforming network topology information

Fig. 7     depicts a schematic view of the step of creating a network map out of the embedded network topology information

## Detailed description of embodiments

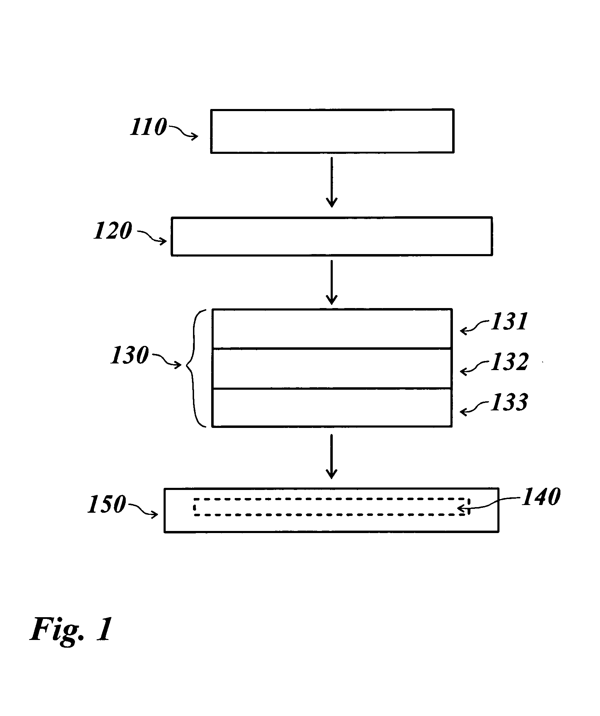

Figure 1 depicts on overview of the steps of the method providing network topology information. The method starts with the step of gathering 110 network topology information, proceeds with the step of embedding 120 network topology information, followed by the step of processing 130 network information, continued by the step of creating 140 network topology information and stops with the step of exporting 150 the network topology information.

The step of processing network topology information in the illustrative embodiment comprises the steps of selecting 131, abstracting 132 and transforming 133 network topology information.

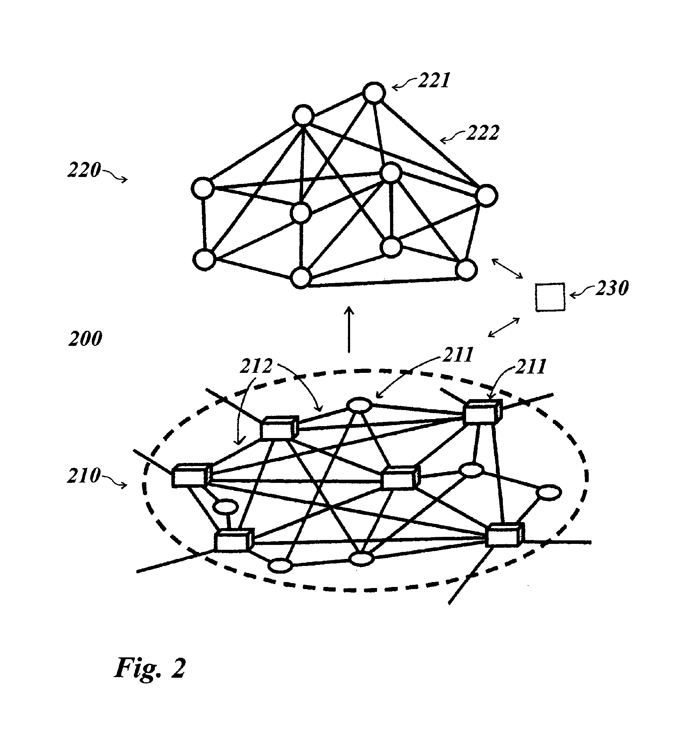

Figure 2 depicts a communication network 200 in an exemplary embodiment. In the lower part of figure 2, the original geographical network topology 210 of the communication network 200 is symbolized. The communication network 210 comprises nodes 211 and links 212. The nodes 211 might be stations of the communication network 210 such as base stations, transmitter and receiver stations, further sender or receiver of the communication network 210. In the upper part of figure 1, still the original topology of the communication network 200 is depicted, but in a virtualized manner, this is the virtualized original network topology 220. This means, the network topology 220 of communication network 200 contains the full information as the geographical original network topology 210. Each node in the geographical representation 210 of the communication network 200 corresponds to a vertex 221 in the virtualized representation 220. Each link 212 in the geographical representation corresponds to an edge 222 in the virtualized representation 220. While the nodes 211 and links 212 in the geographical representation 210 are determined by the geographical position in nature, the vertices 221 and edges 222 in the virtualized representation 220 of the network topology are determined by the characteristics which are relevant in the context of communication, this means by the metadata of the vertices 221 and the metadata of the edges 222. The vertex metadata of each vertex 221 comprise the GPS-position of the respective vertex 221, further available and/or requested data rate, bandwidth etc. of the vertex 221. The edge metadata of each edge 222 comprise data relevant for the communication via the respective edge such as delay, distance, bandwidth, data rate, cost etc. The information which is needed to define each vertex 221 and edge 222 in the virtualized representation 220 of the communication network 200 is obtained by measurements or in any further appropriate way from the geographical representation 210 of the communication network 200 and processed for example in the depicted data processing component 230, in particular by means of a software product adapted to implement the appropriate processing steps. The data processing component might be implemented as a single device or as a combination of devices. Furthermore, the data processing component 200 might in particular gather 110 the detailed network topology information of the virtualized network topology 220 for further embedding 120, selecting 130, abstracting 131 and/or transforming 133 network topology information.

The data processing component 230 in the described preferred embodiment and also in further embodiments may be implemented as a single unit, a stand-alone device, or within a database, integrated in a computer and/or within a computer network. The data processing component 230 may implement steps of the present method through the use of hardware, software and/or hardware capable of executing software in association with appropriate software.

More specifically, the data processing component 230 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of the data processing component 230 may be implemented as processing blocks in a software program. Such software may be employed in a digital signal processor, micro-controller, or general-purpose computer implemented as a single device or integrated in a computer network.

The data processing component 230 may comprise a software product embodied in tangible media, such as magnetic recording media, optical recording media, solid state memory, floppy diskettes, CD-ROMs, hard drives, or any other machine-readable storage medium, wherein, when the program code is loaded into and executed in the data processing component 230, the data processing component 230 becomes an apparatus used for practicing the invention.

The described method comprises to gather 110 detailed information of the original network topology of the communication network 200. The detailed information of the original network topology of the communication network 200 is obtained in particular from network equipment, such as routers, monitoring devices, in particular via Border Gateway Protocol (BGP), by means of a routing analysis solution and/or a Network Management System (NMS) which might be one or more of the nodes 212 in the communication network 200 are adjacent to the nodes 212. The detailed information is provided first from the geographical representation 210 of the communication network 200 and is second calculated for example by the data processing component 230 into detailed virtualized information which gives the characteristics of the vertices 221 and edges 222 relevant for the communication, i.e. into the metadata of the vertices 221 and edges 222. Thus, the virtualized network topology 220 in the present example is calculated by the data processing component 230 from the obtained data of the original geographical representation 210. In general, the network topology metadata which describe the network topology in the virtualized representation 220 are calculated out of the information obtained from the geographical representation 210 of the communication network 200 and give the virtualized representation 220 of the communication network 200 in particular in form of the vertex 221 metadata and edge 222 metadata. The vertex metadata are derived from the metrics, in particular measurements and/or further known parameters, of the nodes 211 in the geographical representation 210 of the communication network 200 which are represented by respective vertices 221 in the virtualized representation 220 of the communication network 200. The edge metadata are derived from the metrics of the links 212 in the geographical representation 210 in the communication network 200 which are represented by respective edges 222 in the virtualized representation 220 of the communication network 200.

It has to be underlined that the virtualized representation 220 of the communication network 200 in figure 2 still contains the full information of the communication network 200, hence in a form or manner appropriate to describe the communication network 200 for the purposes of communication, namely by the metadata of the vertices 221 and edges 222. The original network topology, even the geographical representation 210 of the original network topology of the communication network 200, could still be obtained out of the data of the virtualized representation 220 of the original network topology of the communication network 200, because also the virtualized representation 220 contains amongst others at least the information about the geographical position of the nodes 211 and links 212 of the geographical representation 210 within the metadata of the vertices 221 and edges 222 in the virtualized representation 220 of the communication network 200. With other words, for example the geographical position of a particular node 211 in the geographical representation 210 of the communication network 200 would be one entry or data input in the vertex metadata which characterise the respective vertex 221 in the virtualized representation 220 of the communication network 200.

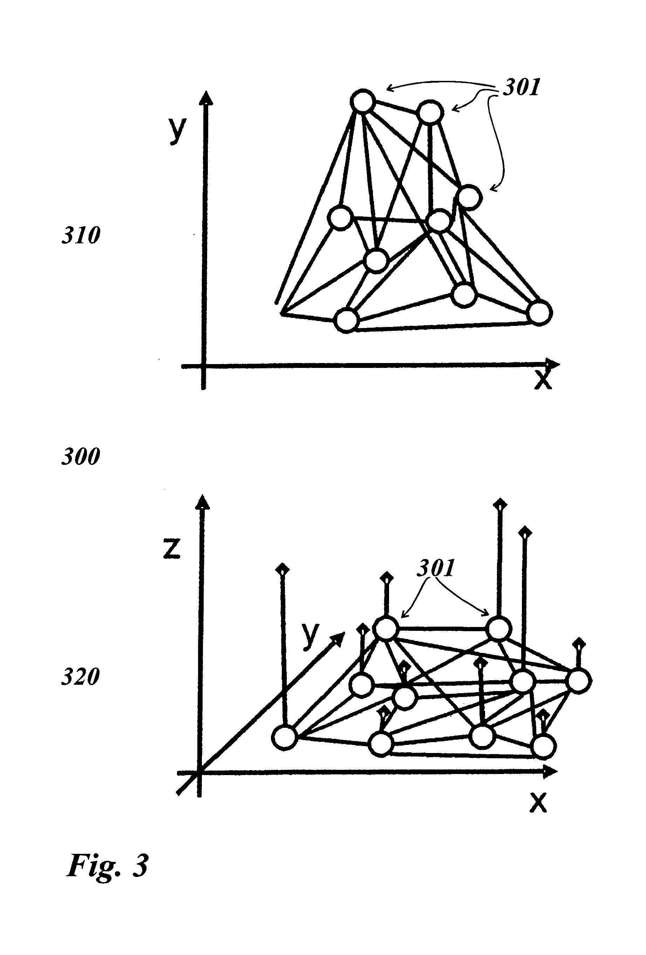

In a further processing step which might in the illustrative example implemented by the data processing component 230 in figure 2, the original network topology determined by the vertex and edge metadata is embedded 120 into a n-dimensional coordinate system, for example a 2-dimensional or 3-dimensional coordinate system, which leads correspondingly to an embedded network topology representation 310 in a 2-dimensional coordinate system as depicted in the upper part of figure 3 or to an embedded network topology representation 320 in a 3-dimensional coordinate system as depicted in the lower part of figure 3. By this embedding step 120, the network topology is (after embedding) not described by nodes 211/ vertices 221 and links 212 /edges 222 any more, but by vectors which end in respective points 301, namely each vector ends in one point 301. In figure 3, the points 301 are depicted for illustrative reasons and the corresponding vectors have been omitted for not overloading the figure, while the vectors are present in the embedded network topology 300. In a basic embedded representation 330, a particular point might correspond to a particular vertex 221 or node 211 and a edge 222 /link 212 might be present as the distance between two points 301 represented by two vectors in the embedded representation 300. In this basic case, even the embedded representation 330 of the network topology is a kind of one-to-one mapping of the network topology from the geographical 210 or virtualized 220 representation of the communication network 200 into the embedded representation 300 of the network topology of the communication network 200.

However, regularly, the mapping of the virtualized representation 220 of the network topology into the embedded representation 300 will be provided by calculations in such a way that the one-to-one correspondence of a vertex 221 into a point 301 is not given any more, but the points 301 are calculated from the metadata of the vertices 221 and/or edges 222 of the virtualized representation 220 in such a way that the position of the points 301 in the embedded representation 300 does not correspond to the position of the respective vertices 221 in the virtualized representation 220 any more. However, even if the position of a point 301 in the embedded representation 300 might not and usually will not correspond to the position of a vertex 221 in the virtualized representation 220 any more, each of the points 301 after embedding corresponds to a vertex 221 in the virtualized network topology before the embedding step has been implemented, with other words there is one point 301 for one vertex 221. However, the position of the point 301 is determined in a way which better suits for characterizing the network topology of the communication network 200 as the virtualized 220 or geographical 210 original network topology and the position of the respective vertex 221 or node 211 therein. For example, two points 301 in the embedded representation 300 of the communication network 200 might be close together, not because the distance of the corresponding vertices 221 or nodes 211 in the virtualized 220 or geographical 210 representation have a small geographical distance, but because the given bandwidth between the two points 301 is high and therefore the two points 301 are close together in the sense that the communication between the two points 301 is facilitated by the high provided bandwidth and the two points 301 appear adjacent from the communication point of view, with other words it is easy to communicate from one of the points 301 to the other. In another example, the two points 301 are close together in the embedded network topology 300, because the cost of the communication between the two points 301 is low, with other words, because the financial effort to communicate from one point 301 to the other is low, for example if the communication between the two points 301 profits from a communication contract with low prices or a flat rate. Therefore, the two points 301 appear adjacent for financial reason in the context of communication. In another example, both of the aspects, namely provided bandwidth and financial effort, might be taken into account for determining the position of the two points 301 in the embedded representation 300. This results in that two points 301 appear as very close in case the provided bandwidth between the two points 301 is high and contemporaneously the financial effort even for and despite the high bandwidth is low. In the opposite case, namely if the provided bandwidth between the two points 301 is low and - despite the low bandwidth - the financial effort or cost between the two points 301 is high, the two points 301 appear as far away and will be depicted in the embedded representation 300 of the network topology in a distance which is relative high in comparison with the distances of other points 301 with other better communication (higher bandwidth and/or lower costs). Two points 301 have a medium distance in the embedded representation 300 according to the last example, if the provided bandwidth between the two points 301 is high, but the cost of communication is high, too, or if the provided bandwidth between the two points 301 is low, but the costs are low, too. In more general terms, by applying the embedding function on each vertex metadata and/or on each edge metadata, the values of the respective vertex and/or edge metadata are translated into the vector coordinates of the respective points 301 in the n-dimensional coordinate system in the embedded representation 300, wherein each of the points 301 corresponds to a vertex 221 in the network topology before embedding, this is in the virtualized representation 220 of the network topology, and each of the vector coordinates is calculated out of one or more of the vertex metadata and/or out of one or more of the edge metadata of the network topology.

In the above given example, the position of two points 301 is derived from the bandwidth and/or cost of communication between the two points 301. In this case, from the distance of the two points 301 (Euklidean Distance) in the embedded representation 300, it could be derived, if the communication between the two points 301 is fast/slow and/or cheap/expensive according to the particular previously implemented embedding function, which defines which parameters out of the metadata are relevant for calculating the position of the points 301 in the embedded representation 300. However, in particular in case the embedded topology has three or more dimensions (but even in case of two dimensions according to the determined calculation), the vector coordinates might be calculated by the metadata of the vertices 221 and/or edges 222 in any further way which might appear suitable for processing information from the communication point of view. In a preferred embodiment, in case of more-dimensional vector coordinates, one vector coordinate of each vector might indicate the distance calculated out of the provided bandwidth as described above, a further vector coordinate might indicate the distance derived from the financial effort and/ or cost of communication and the respective metadata vertex and/or edge metadata of the virtualized network topology 220, a further vector coordinate in the embedded network topology 300 might indicate the mixture of bandwidth and cost for determining the relative distance from the point 301 to another point 301 of the communication network, possibly even more specified in further vector coordinates according to the respective other point 301 of the communication network, this means each point to each point distance for example.

In a preferred embodiment, the detailed information gathered from the original network topology 210, 220 might still be present or derivable from the vector coordinates of each point 301 in the embedded network topology 300. In other embodiments, some of the information of the original network topology 210, 220 might be translated in such a way, that the original detailed information of the original network topology 210, 220 is not be derivable out of the embedded representation 300, in particular out of the vector coordinates of the points 301 of the embedded representation 300 any more.

In general, it should be mentioned that the method of the present invention might be implemented in such a way, that the detailed information of the communication network 200 might be derivable out of the embedded representation 300. In this case, the access to the detailed information out of the embedded representation might be provided only to authorized person. Further and in more detail, the detailed information might even be even derivable, in particular out of the vector coordinates of the embedded representation 300 even after one or more of the steps of selecting 131, abstracting 132 and/or transforming 133 the embedded network topology information has been implemented. In this case the detailed information might be stored as one or more vector coordinates in an n-dimensional coordinate system (with correspondingly many vector coordinates). In further embodiments, one or more of the embedding 120, selecting 131, abstracting 132 and/or transforming 133 steps might be implemented in such a way that at least part of the detailed information of the original network topology 210, 220 is not derivable out of the embedded network topology 300 any more. In particular, after implementing one or more of the steps of selecting 131, abstracting 132 and transforming 133, the information might be processed in such a way that from the output of the processing the exact input information, for example each value of the input parameter, can not be derived any more. In the latter case, the detailed information is input into a particular calculation and the value of each input parameter (distance between one or more points, bandwidth between one or more points etc.) which determine the result of the calculation, is not re-calculable from the result any more. For example, it the value of a sum is known and even that there are five summands, the value of each summand is not derivable out of the sum, any more. Further, if the result is determined by more than only one information or kind of data, the value of each input parameter or kind of data is not re-calculable from the result. For example, if the vector coordinates indicate only the distance between two points 301 in the embedded representation 300 based on the metadata of vertices 221 and edges 222 in the virtualized representation 220, e.g. metadata such as bandwidth and cost. In this case, the values of the bandwidth and cost metrics of the respective vertices 221 and edges 222 of the virtualized network topology 220 do not appear any more in vector coordinates of the points 301 in the embedded network topology. Thus, the information of each of the single metadata value, i.e. of the exact value of the bandwidth between two points or of the exact cost of communication between the two points is not derivable any more from the vector coordinates in the embedded network topology 300, because there is provided only vector coordinates for the result of the calculation, but not for the input parameter of the calculation or respective metadata.

The vector coordinates of the points 301 are calculated from one or more of the vertex 221 and/or edge 222 metadata. In preferred embodiments, in order to determine from which vertex 221 and/or edge 222 metadata the vector coordinates of the points 301 are calculated, a user specific subset of the vertex 221 metadata and/or of the edge 222 metadata might be chosen and the embedding function is applied on the selected subset of the vertex 221 metadata and/or the edge 222 metadata for calculating the vector coordinates of the points 301. In particular, by the specific embedding function which is used, it is determined which of the vector coordinates is calculated by which metadata according to which mathematical formula. Accordingly, dependent on the used embedding function, each of the vector coordinates is calculated and the use of one embedding function results in a specific embedded representation 300 of the communication network and the use of a further different embedding function on the same network topology information derived from the original geographical 210 or virtualized 220 representation results in a different embedded representation 300 corresponding to the same original network topology of the communication network 200. Therefore, based on the same original network topology 210, 220, a plurality of embedded representations 300 might be calculated according to the used embedding function and/or based on the chosen subset of the vertex 221 and/or edge 222 metadata of the corresponding virtualized representation 220 of the network topology of the communication network 200.

The further processing of the embedded network topology 300 will be described by a preferred embodiment. If more than one embedded network topologies 300 have been calculated, each of the plurality of the embedded network topologies might be further processed in a similar or different manner of implementing the steps of selecting 131, abstracting 132 and/or transforming 133.

On an exemplary embedded network topology 300, the steps of selecting 131, abstracting 132 and transforming 133 the embedded network topology information will be described in more detail in the following.

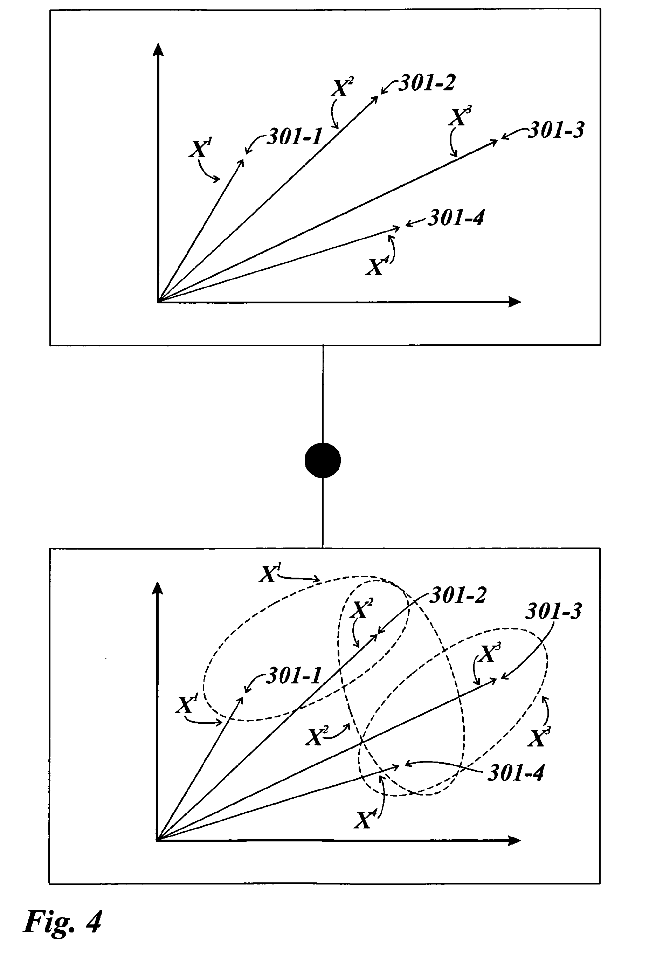

Figure 4 depicts the step of selecting 131 embedded network topology information. In the embedded network topology 300, for one or more points 301, normally for a group of points 301, a representative is chosen. While the representative represents the group of points 301, the one or more points 301, of which the representative is chosen, still exist, this means they are not deleted out of the embedded network topology 300, rather they are grouped together or aggregated to a group represented by the representative. Each of the points 301 in the embedded network topology 300 is equivalent to a vector which has in the orthonormal n-coordinates system representation the same coordinates as the point 301. In figure 4, the points 301 in the embedded network topology 300 are represented by their respective vectors x, namely x1, x2, x3 and x3 for illustrative reasons for four points 301, respectively, which for clarifying purposes are indicated as 301-1, 301-2, 301-3, 301-4. By the selecting step 131, for one or more points 301-1, 301-2, 301-3, 301-4 a representative is chosen. Preferably, one or more groups of points 301-1, 301-2, 301-3, 301-4 are aggregated into a cluster and a representative of each group of points 301-1, 301-2, 301-3, 301-4, i.e. of each cluster, is chosen. With other words, each cluster comprises one or more points represented by the representative of the cluster.

In a preferred embodiment, each of the group of points 301, which are actually aggregated - because there might be points that are not aggregated, but stay separated - are aggregated into one cluster exclusively. In this case, each point is only part of one particular cluster. In another preferred embodiment, one or more points may be part of more than one cluster. In this case, one or more points are comprised by more than one cluster, with other words the clusters are overlapping for one or more points which are part of a first cluster and one or more further clusters.

In figure 4, the upper part depicts the points 301 before the selecting step 131 and the lower part depicts the points 301 after the selecting step 131. As the points 301-1, 301-2, 301-3, 301-4 are equivalent to the vectors x1, x2, x3 and x4, respectively, a cluster is also termed as vector set X. The points 301-1 and 301-2 are aggregated into a cluster which is termed as the vector set X1, the points 301-3 and 301-4 are aggregated into a cluster which is the vector set X3 and the points 301-2 and 301-4 are aggregated into a cluster which is the vector set X2. As already mentioned, according to the embodiment, each of the points 301-1, 301-2, 301-3, 301-4 and the corresponding vectors x1, x2, x3, x4 belong exclusively to one cluster or might belong to more than one cluster. In figure 4, point 301-2 and corresponding vector x2 belongs to cluster X1 and to cluster X2. Point 301-4 and corresponding vector x4 belongs to cluster X2 and to cluster X4.

In general, there might be points 301 which belong to only one cluster X, to more than one cluster X or to no cluster X at all according to the selection step 131 applied. The criteria which determine the selection step 131 (and further similarly the abstraction 132 and transforming step 133 or steps 131, 132, 133) correspond to the prerogatives of the network map which should be established in the end out of the corresponding processing of the embedded network topology 300, this means which kind of information should be derivable and at which granularity out of the processed embedded network topology 300.

For example, it might be determined that two points 301 are aggregated into one cluster X, if the two points 301 are very close together in the embedded network topology representation 300, wherein the wording "close" might be understood as a geometrical distance or as the effort (bandwidth, cost) of communication between the first point 301 and the other point 301.

In general, for determining, which points 301 are represented by a representative, this means which points 301 are aggregated into a cluster X, information in the embedded network topology 300 or information of the original geographical 210 or virtualized 221 network topology of the network topology before embedding may be used. The information may comprise properties of the points 301 in the embedded topology 300, in particular the position, relative position, distance between the points and/or properties of one or more vertex 221 metadata and/or edge 222 metadata. Furthermore, policy information of the gathered original network topology 210, 220 may be used. For example, there may exist the policy that particular vertices 221 in the virtualized network topology 220 which correspond to particular nodes 211 in the geographical network topology 210, e.g. two particular base stations in the original network topology, may not be grouped together as two points 301 into a common cluster in the embedded network topology 300, because simply it is determined that these two base stations should not be merged in an processed selected or abstracted representation as they should stay visible as single separate network nodes.

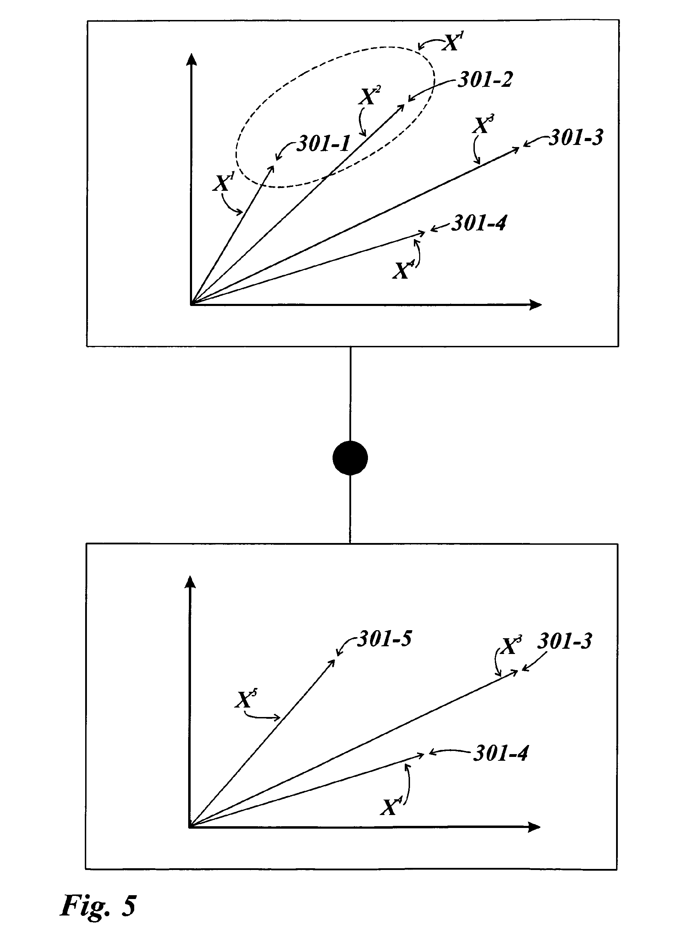

Referring back to the preferred embodiment, figure 5, in which the same numerals are used as in figure 4 as appropriate, depicts in more detail the step of abstracting 132 the embedded network topology 300 information. Abstracting is to be understood in this context as summarizing, merging, combining or melting together. This means, by the step of abstracting 132, two or more points 301 are merged and are replaced by a single point. After the step of abstracting 132, the points 301 which are merged do not exist any more in the embedded network topology 300. Preferably, the points 301 which are abstracted have been aggregated into a common cluster X by a foregoing step of selecting 131. However, the points 301, which are abstracted in the abstracting step 132, might be determined independently from a foregoing selecting step 131 in the abstracting step 132. There might be no foregoing selecting step 131 at all.

In figure 5, the points 301-1 and 301-2 and their corresponding vectors x1 and x2 which have been aggregated into cluster X1 (in the foregoing selection step 131 according to the described exemplary embodiment) are abstracted 132, i.e. merged into a single point 301-5 represented by vector x5. After the abstracting step 132, the two points 301-1 and 301-2 do not exist any more, but are replaced by the single point 301-5. The position of point 301-5 might be determined along different criteria. For example, the position of point 301-5 might be determined from the vector x5 as the mean vector of vectors x1 and x2 as is depicted in figure 5. In another embodiment, one of the points 301-1 or 301-2, which are present, before the abstracting step 132 is processed, might be the point 301-5 after the abstracting step 132 or more precisely become point 301-5 by abstracting or merging points 301-1 and 301-2 into point 301-5. In another embodiment, the point which replaces the points before the abstracting step might be determined according to any criteria or characteristics (such as metrics, metadata, properties, cost values, topology constraints) derived out of the embedded network topology or the original network topology.

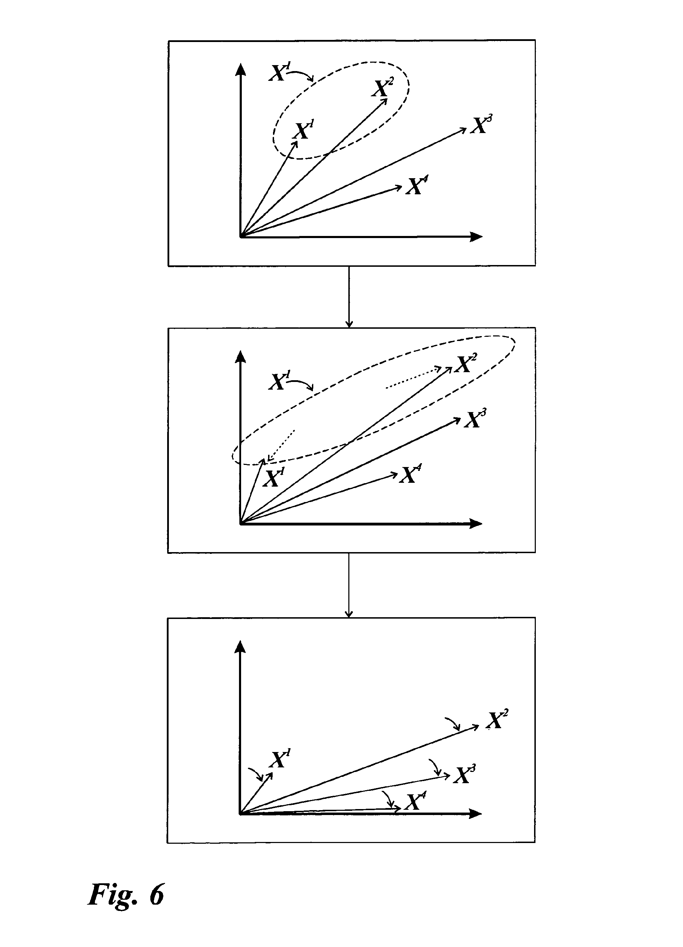

Figure 6 depicts in more detail the step of transforming 133 embedded network topology 300 information. The transforming 133 results in particular in that the position of one or more points 301-1, 301-2, 301-3, 301-4 represented by their respective vectors x1, x2, x3 and x4, in the embedded network topology 300 is changed. In figure 6, only the vectors x1, x2, x3 and x4 (of the corresponding points 301-1, 301-2, 301-3, 301-4) are depicted in order not to overload the picture (the corresponding points 301-1, 301-2, 301-3, 301-4 are of course present as the end points of the respective vector). As each point 301 in the embedded network topology 300 is represented by a vector x or in more detail described by the vector coordinates, the positions of the points 301-1, 301-2, 301-3, 301-4 are changed as the vectors x1, x2, x3, x4, i.e. the respective vector coordinates of vectors x1, x2, x3, x4 are transformed by geometrical operations. The vectors x1, x2, x3, x4 (or generically x) may be in particular scaled, normalized, stretched, translated, shifted, reflected or rotated. For example, by stretching a vector x, the length of the vector x is changed, therefore the vector has new vector coordinates which contemporaneously correspond to the respective point 301 in the embedded network topology 300. Therefore, the vector x and consequently the embedded network topology 300 is transformed. A transforming step might be applied to only one vector, to more than one vector, where the transforming step might be same or different for one or more of the transformed vectors.

In this context, it has to mentioned that preferably in the embedded network topology, the vector coordinates are chosen to describe points, because the vectors might be more suitable for mathematical operations of (geo)graphical, geometrical algorithms, this means for the processing of the embedded network topology. This might be in particular so, if the vectors are further described in polar coordinates, i.e. by length and angle or degree. However, in further embodiments, in the embedded network topology, there might only be implemented a processing of points or of points and vectors likewise according to the processing step.

In figure 6, a first transforming 133 is depicted in the upper picture as starting point and in the medium picture as end point. The vectors x1 and x2 are translated, in particular the distance between vector x1 and vector x2 enlarged by translating each of vectors x1 and x2 from the common middle between the two vectors x1 and x2. For illustrative reasons, the vectors x1 and x2 are grouped together into a group X1, while this processing is optional and might not be present in other embodiments. In addition, in a second transformation step 133 depicted in the lower picture, all vectors x1, x2, x3 and x4 are rotated and shifted. Accordingly, the points 301-1, 301-2, 301-3 and 301-4 corresponding to vectors x1, x2, x3 and x3 are repositioned.

In further preferred embodiments, the steps of selecting 131, abstracting 132 and/or transforming 133 of the embedded network topology 300 information may be executed repeatedly and/or in altered order. For example, in a first step of selecting 131 embedded network topology 300 information, one or more points 301 are aggregated into clusters X, wherein the points 301 of a cluster X are represented by a representative vector. Then, in a transformation step 133, the clusters X are repositioned, in particular the vector coordinates of the representatives of the clusters X are shifted. Thereby, the clusters X and the points 301 comprised by a cluster X are repositioned accordingly. The representatives of determined clusters X, in more detail the representative vectors of determined clusters X, are aggregated in a selecting step 131 again in one or more clusters X. Each cluster X after this selecting step 131 may comprise the representative vectors of one or more clusters X. Finally, one or more of the representatives of the clusters X which result from the foregoing selecting step 131 may be abstracted 132 and therefore replaced by a single vector which would be the representative vector of the corresponding clusters X. In this case, after the latest abstracting step 132, the abstracted representative vectors are replaced by the single representative vector, while the points which are comprised by the clusters X of which the representative vectors are abstracted 132 are still present in the clusters X which may now form a single cluster X represented by the single representative vector.

Referring back to the described preferred embodiment, the processed network topology information is exported 150 to provide information about the network topology according to the processed steps of selecting 131, abstracting 132 and/or transforming 133. In particular, the processed network topology information might contain less details than the original network topology 210, 220 and therefore avoids that information about details of the original network topology 210, 220 is exposed.

In a preferred embodiment, the processed network topology information might be exported or exposed by means of a network map. Thus, from the processed network topology a network map is created 140. In preferred embodiments, the network map may be created 140 based on the results of one or more of the steps of selecting 131, abstracting 132 and/or transforming 133 the embedded network topology 300 information. In addition to processed network topology information edge 222 metadata, vertex 221 metadata and/or properties derived from the embedded network topology 300 and/or cost values, metrics and/or properties derived from the original network topology information 210, 220 may be used.

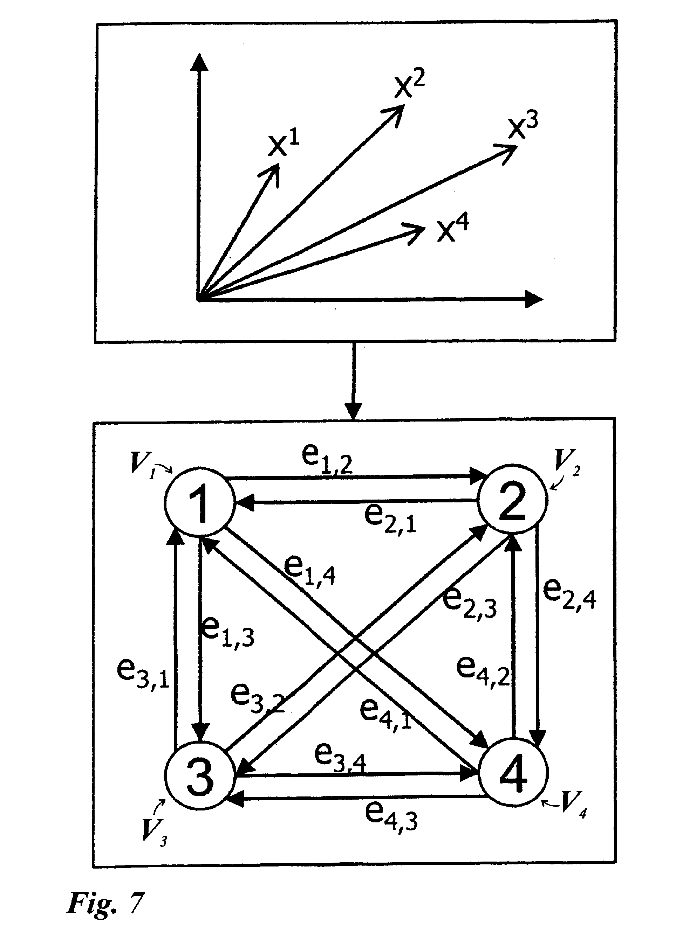

Fig. 7 depicts the creation of a network map out of the embedded network topology information in an illustrative embodiment. In the upper part of the figure, embedded network topology information is depicted symbolized by the vectors x1, x2, x3, x4 which contains, in particular within the vector coordinates, the processed network topology information. Based on this information and further information such as edge metadata, vertex metadata and/or properties derived from the embedded network topology and/or cost values, metrics and/or properties derived from the original network topology information, a network map is created, in particular by mathematical calculations. This network map might be a full meshed network map as depicted in the lower part of figure 7 or in further embodiment a partial network map comprising only particular information, in particular depending on a corresponding network topology information request and/or permitted information output as provided by the network provider. The exemplary network map depicted in figures 7 is defined in particular by the edge weights or edge metadata of all edges $e_{1,2}$, $e_{2,1}$, $e_{1,3}$ ... combining the vertices v1, v2, v3 and v4 of the created network map. The values of the network map are calculated by mathematical formula.

For illustrative reason, a particular calculation might be as follows:

For the creation of the graph G of the network map, the graph G = (V,E) is calculated from vector set X; X = {$x_1$, $x_2$ ...} using a mapping of the vertices, here v1, v2, v3, v4 from the vector positions with V = f(X); V = {v1, v2 ...} and E = g(X) with E = {$e_{1,2}$, $e_{2,1}$, $e_{1,3 ...}$} and $g_{1,2}(X) = \Pi_i (x_1^T x_i / |x_2 - x_i|)$ where $x_i \in X$.

In this particular example, each edge weight is created from the product of all inner products between the source vector ($x_1$) to any other vector ($x_i$), divided by the other vector's distance to the destination vector ($x_2$).

In a further calculation, the edge weights are calculated based on information of the embedded network topology with vectors x and metrics m derived from the original network topology, e.g. by the formula

$$e_{i,j} = \Sigma_m e^m{}_{i,j} + |x_j - x_i|.$$

The processed network topology information, in particular in form of one or more network maps which are created based on the processed network topology information may be exported 150 by an appropriate interface, in particular an interface of an ALTO server (ALTO = Application-Layer Traffic Optimization).

As a conclusion, the teaching of the present invention proposes a method to automatically process, in particular to embed and abstract, network information in order to be able to export it with a pre-defined level-of-detail. This on the one hand ensures that the exported network maps are of reasonable sizes, and, on the other hand, it also allows hiding certain details of the internal network structure that a network operator may not want to disclose. The present invention achieves that even very large and/or complex network topology can be exported in a reasonable way, without requiring manual configuration. Thus, the described method is a key component of an ALTO solution and other network exposure methods in large networks.

**Claims**

1. A method for providing network topology information in a communication network (200), the method comprising:

- gathering (110) detailed information of a network topology (220) of the communication network (200), the detailed information comprising vertex (221) metadata and edge (222) metadata of the network topology (220);
- embedding (120) the network topology (220) in a n-dimensional coordinate system (310, 320)

in particular dependent on the vertex (221) metadata and/or the edge (222) metadata, wherein the embedded network topology (300) is represented by a set of points (301) in the n-dimensional coordinate system (310, 320);
- processing (130) network topology information of the embedded network topology (300); and
- exporting (150) the processed network topology information.

2. The method according to claim 1, wherein the step of gathering (110) detailed information of a network topology (220) of the communication network (200) comprises:

- obtaining network topology information from network equipment, in particular routers, monitoring devices, in particular via Border Gateway Protocol, a routing analysis solution or a Network Management System.

3. The method according to claim 1, wherein the step of gathering (110) detailed information of a network topology (220) of the communication network (200) comprises:

- calculating network topology metadata describing the network topology (220), the network topology metadata comprising vertex (221) metadata derived from metrics of nodes (211) of the communication network (200) represented by respective vertices (221), and edge (222) metadata derived from metrics of links (212) of the communication network (200) represented by respective edges (222).

4. The method according to claim 1, wherein the step of embedding (120) the network topology into a n-dimensional coordinate system (310, 320) comprises:

- applying an embedding function on one or more of the vertex (221) metadata and/or on one or more of the edge (222) metadata, wherein the embedding function translates values of the one or more vertex (221) metadata and/or edge (222) metadata into vector coordinates of the points (301) in the n-dimensional coordinate system (310, 320), wherein each of the points (301) corresponds to a vertex (221) in the network topology (220) before embedding, wherein each of the vector coordinates is calculated out one or more of the vertex (221) metadata and/or one or more of edge (221) metadata of the network topology (220).

5. The method according to claim 4, wherein the step of embedding (120) the network topology (220) further comprises:

- choosing a user specific subset of the vertex (221) metadata and/or of
the edge (222) metadata and applying the embedding function on the chosen subset of the vertex (221) metadata and/or the edge (221) metadata for
calculating the vector coordinates.

6. The method according to claim 1, wherein the step of processing (130) network topology information of the embedded network topology (300) comprises:

- selecting (131) representatives of one or more of the points (301) of the embedded network topology (300) using properties of the points (301) of the embedded topology (300), in particular position, relative position, distance, bandwidth, datarate and/or properties of one or more of the vertex (221) metadata and/or of the edge (222) metadata and/or policy information of the gathered network topology information.

7. The method according to claim 6, wherein the step of selecting (131) representatives of one or more of the points (301) of the embedded network topology (300) comprises:

- aggregating one or more of the points (301) of the embedded network topology (300) into one or more clusters comprising one or more of the points (301) of the embedded network topology (300).

8. The method according to claim 1, wherein the step of processing (130) network topology information of the embedded network topology (300) comprises:

- abstracting (132) the embedded network topology (300) by merging points (301) into a single point (301).

9. The method according to claim 1, wherein the step of processing (130) network topology information of the embedded network topology (300) comprises:

- transforming (133) vector coordinates of one or more points (301) of the embedded network topology (300) by geometrical operations, in particular by scaling, normalization, stretching, translating, shifting, reflection and/or rotation.

10. The method according to one or more of the claims 6 to 9, comprising:

- executing one or more of the steps of selecting (131), abstracting (132) and/or transforming (133) embedded network topology (300) information repeatedly and/or in altered order.

11. The method according to claim 1, wherein the step of exporting (150) the processed network topology information comprises:

    - creating (140) a network map out of the processed (130) network topology information.

12. The method according to claim 11, wherein the step of creating (140) a network map out of the processed (130) network topology information further comprises:

    - using in addition to processed (130) network topology information edge (222) metadata, vertex (221) metadata and/or properties derived from the embedded network topology (300) and/or cost values, metrics and/or properties derived from the gathered network topology (220) information.

13. The method according to claim 1, wherein the step of exporting (150) the processed (130) network topology information further comprises:

    - exporting (150) the processed (130) network topology information by a corresponding interface, in particular ALTO.

14. A data processing component (230) adapted to gather (110) detailed information of a network topology (220) of the communication network (200), the detailed information comprising vertex (221) metadata and edge (222) metadata of the network topology (220), to embed (120) the network topology (220) in a n-dimensional coordinate system (310, 320), in particular dependent on the vertex (221) metadata and/or the edge (222) metadata, wherein the embedded network topology (300) is represented by a set of points (301) in the n-dimensional coordinate system (310, 320), to process (130) network topology information of the embedded network topology (300) and to export (150) the processed (130) network topology information.

15. A software product adapted to embed a network topology (220) of a communication network (200) in a n-dimensional coordinate system (310, 320) based on detailed information of the network topology (220), the detailed information comprising vertex (221) metadata and edge (222) metadata of the network topology (220), wherein the embedded network topology (300) is represented by a set of points (301) in the n-dimensional coordinate system (310, 320), to process (130) network topology information of the embedded network topology (300) and to export (150) the processed (130) network topology information, when executed by a data processing component (230).

110 →

120 →

130 → 131
132
133

150 → 140

*Fig. 1*

Fig. 2

**Fig. 3**

**Fig. 4**

**Fig. 5**

*Fig. 6*

**Fig. 7**

Europäisches
Patentamt

European
Patent Office

Office européen
des brevets

## EUROPEAN SEARCH REPORT

Application Number

EP 13 29 0089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | AMANTE LEVEL 3 COMMUNICATIONS S ET AL: "Topology API Use Cases; draft-amante-i2rs-topology-use-cases-00.txt", TOPOLOGY API USE CASES; DRAFT-AMANTE-I2RS-TOPOLOGY-USE-CASES-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 14 February 2013 (2013-02-14), pages 1-21, XP015089997, [retrieved on 2013-02-14] * page 8, paragraph 2 * * page 9, paragraph 1 - paragraph 2 * * page 14, paragraph 2 * ----- | 1-15 | INV. H04L12/24 |
| Y | SHAVITT Y ET AL: "BIG-BANG SIMULATION FOR EMBEDDING NETWORK DISTANCES IN EUCLIDEAN SPACE", IEEE / ACM TRANSACTIONS ON NETWORKING, IEEE / ACM, NEW YORK, NY, US, vol. 12, no. 6, 1 December 2004 (2004-12-01), pages 993-1006, XP001220666, ISSN: 1063-6692, DOI: 10.1109/TNET.2004.838597 * page 993, left-hand column * * page 994, left-hand column * * page 995, right-hand column * ----- | 1-15 | |
| | | | TECHNICAL FIELDS SEARCHED (IPC) |
| | | | H04L G06K |
| A | "Private Network-Network Interface Specification Version 1.1 (PNNI 1.1), af-pnni-0055.002", ATM FORUM TECHNICAL COMMITTEE, XX, XX, 1 April 2002 (2002-04-01), pages 1-77, XP002413847, * page 17 - page 18 * ----- | 6-8 | |

The present search report has been drawn up for all claims

| Place of search | Date of completion of the search | Examiner |
|---|---|---|
| The Hague | 26 September 2013 | Dely, Peter |